# EUROPÄISCHE PATENTSCHRIFT

(11) **EP 1 371 245 B1**
(45) Veröffentlichungstag und Bekanntmachung des Hinweises auf die Patenterteilung: **20.10.2004**
(21) Anmeldenummer: 02753688.7
(22) Anmeldetag: 22.03.2002
(51) Int. Cl.: H04Q 7/22

(54) **VERFAHREN ZUM ADRESSIEREN VON KURZNACHRICHTEN AN MINDESTENS EIN FÜR DEREN EMPFANG GEEIGNETES ENDGERÄT IM FESTNETZ**
METHOD FOR ADDRESSING SHORT MESSAGES TO AT LEAST ONE TERMINAL SUITABLE FOR RECEIVING THE SAME IN A FIXED NETWORK
PROCEDE D'ADRESSAGE DE MESSAGES COURTS A AU MOINS UN TERMINAL DE RESEAU FIXE, APPROPRIE POUR LA RECEPTION DUDIT MESSAGE

(30) Priorität: 22.03.2001 DE 10114112
(43) Veröffentlichungstag der Anmeldung: 17.12.2003
(73) Patentinhaber: SIEMENS AKTIENGESELLSCHAFT, 80333 München (DE)
(72) Erfinder: GOERTZ, Werner, 46282 Dorsten (DE)
(86) Internationale Anmeldenummer: PCT/DE2002/001055
(87) Internationale Veröffentlichungsnummer: WO 2002/078374

(56) Entgegenhaltungen:
- WO-A-01/20929
- WO-A-99/16149
- "Access and Terminals (AT); Short Message Service (SMS) for PSTN/ISDN; Short Message Communication between a fixed network Short Message Terminal Equipment and a Short Message Service Centre" ETSI ES 201 912 V1.1.1, Januar 2002 (2002-01), XP002206404

## Beschreibung

Die Erfindung bezieht sich auf ein Verfahren zum Adressieren von Kurznachrichten an mindestens ein für deren Empfang geeignetes Endgerät im Festnetz gemäß dem Oberbegriff des Patentanspruches 1.

Das Senden und Empfangen von Kurznachrichten, engl.: Short Messages" wurde bislang als Teleservice in GSM-Funknetzen angeboten, bei dem ein A-Teilnehmer einem B-Teilnehmer in einer Übertragungssitzung bis zu 160 alphanumerische Zeichen übertragen kann (vgl.: Funkschau 19/98, Seiten 67 bis 69). Derzeit gibt es Bestrebungen diesen Dienst auch in Festnetzen, z.B. im Public Switched Telecommunications Network (PSTN) oder im Integrated Services Digital Network (ISDN), zu implementieren. Bei dem europäischen Standardisierungsinstitut für Telekommunikation ETSI ist deshalb unter der Registratur DES/AT-030009 Vol. 0.1.1; 2001-02 eine Publikation zum Thema "Access and Terminal (AT) - Short Message Service (SMS) for PSTN/ISDN" erschienen. Dieser SMS-Dienst im Festnetz ermöglicht es, mit entsprechenden Festnetz-Telefonen (sowohl ISDN-Telefonen als auch PSTN-Telefonen) "Short Messages" zu senden und zu empfangen. Das Versenden und Empfangen geschieht hierbei immer über ein dafür speziell ausgebildetes Dienstezentrum, dem sogenannten "Short Message Service Center (SMSC)", welches an das öffentliche Telefonnetz angeschlossen ist.

Für den Parallelbetrieb mehrerer SMS-fähiger Endgeräte am analogen oder digitalen Festnetzanschluss wird momentan zur Adressierung einer Kurznachricht (Short Message) an ein gewünschtes Endgerät eine Zahlenkennung, der sogenannte "Terminal Identifier (TID)", genutzt. Der Benutzer hat hierbei die Möglichkeit, einem Endgerät genau eine solche "Terminal ID" zuzuweisen. Das jeweilige Endgerät reagiert hierbei nur auf Rufe vom "Short Message Service Center", die genau dieser einen "Terminal ID" entsprechen. Die Adressierung von Kurznachrichten an SMS-fähige Nebenstellen, sogenannte SMS-Entitäten (Nebenstellen zum Empfangen von Kurznachrichten), von als Nebenstellenanlagen ausgebildeten, im Parallelbetrieb am Festnetz betreibbaren, schnurgebundenen oder schnurlosen Festnetzendgeräten, z.B. DECT-Mobilteilen eines DECT-Schnurlostelefons oder Internteilnehmern von TK-Anlagen, ist hiermit jedoch nicht möglich.

Bei am ISDN-Netz betriebenen ISDN-Nebenstellenanlagen ist es bekannt, die einzelnen Nebenstellen der TK-Anlage über "Multiple Subscriber Number (MSN)" zu adressieren.

Die der Erfindung zugrundeliegende Aufgabe besteht darin, Kurznachrichten im Festnetz sowohl an entweder im Einzelbetrieb am Festnetz betriebenen oder im Parallelbetrieb am Festnetz betriebenen Festnetzendgeräten als auch an SMSfähigen Nebenstellen, sogenannte SMS-Entitäten (Nebenstellen zum Empfangen von Kurznachrichten), von als Nebenstellenanlagen ausgebildeten, entweder im Einzelbetrieb am Festnetz betriebenen oder im Parallelbetrieb am Festnetz betriebenen, schnurgebundenen oder schnurlosen Festnetzendgeräten zu adressieren.

Diese Aufgabe wird ausgehend von dem im Oberbegriff des Patentanspruches 1 definierten Verfahren durch die im Kennzeichen des Patentanspruches 1 angegebenen Merkmale gelöst.

Die der Erfindung zugrundeliegende Idee besteht darin, jedem Festnetzendgerät zur Adressierbarkeit von Kurznachrichten mehrere erste einstellige Zahlenkennungen zuzuweisen, so dass bei einem als Nebenstellenanlage ausgebildeten Festnetzendgerät die Zahlenkennungen beliebig auf die Nebenstellen verteilbar sind.

Mit der Einführung von zweiten einstelligen Zahlenkennungen zusätzlich zu den ersten einstelligen Zahlenkennungen gemäß Anspruch 2 kann die Anzahl der insgesamt in einem Festnetz adressierbaren Endgeräte erhöht werden.

Mit dem Einsatz der ersten und zweiten Zahlenkennungen gemäß Anspruch 3 kann eine einfache Unterscheidung von zu adressierenden Festnetzendgeräten und Festnetznebenstellen erreicht werden.

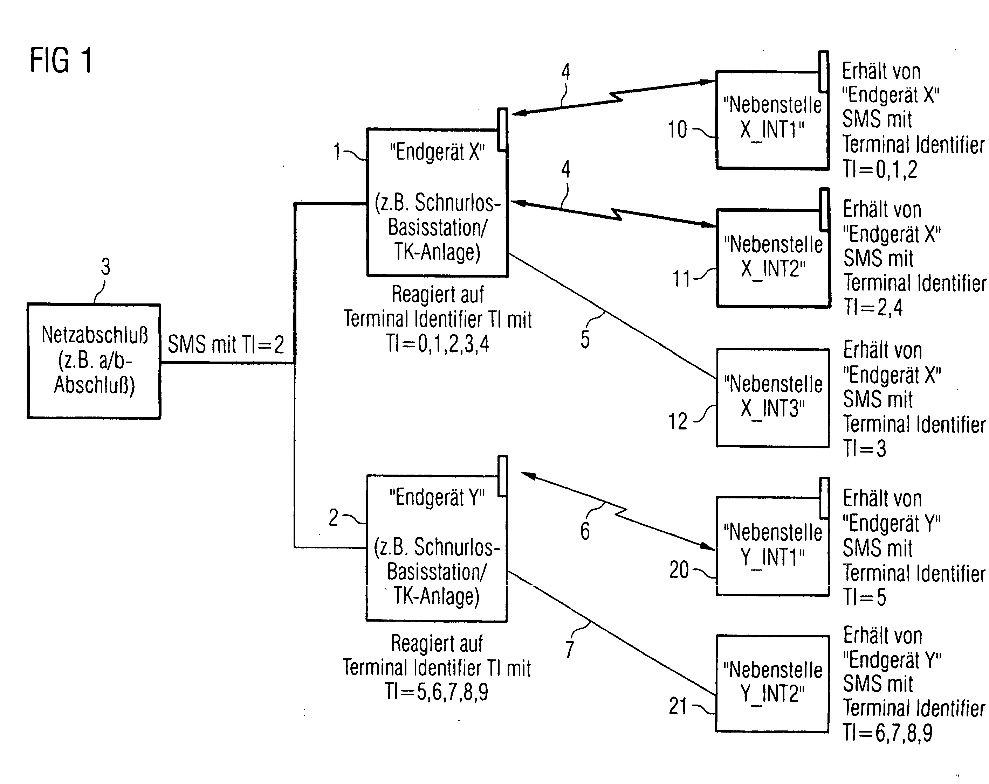

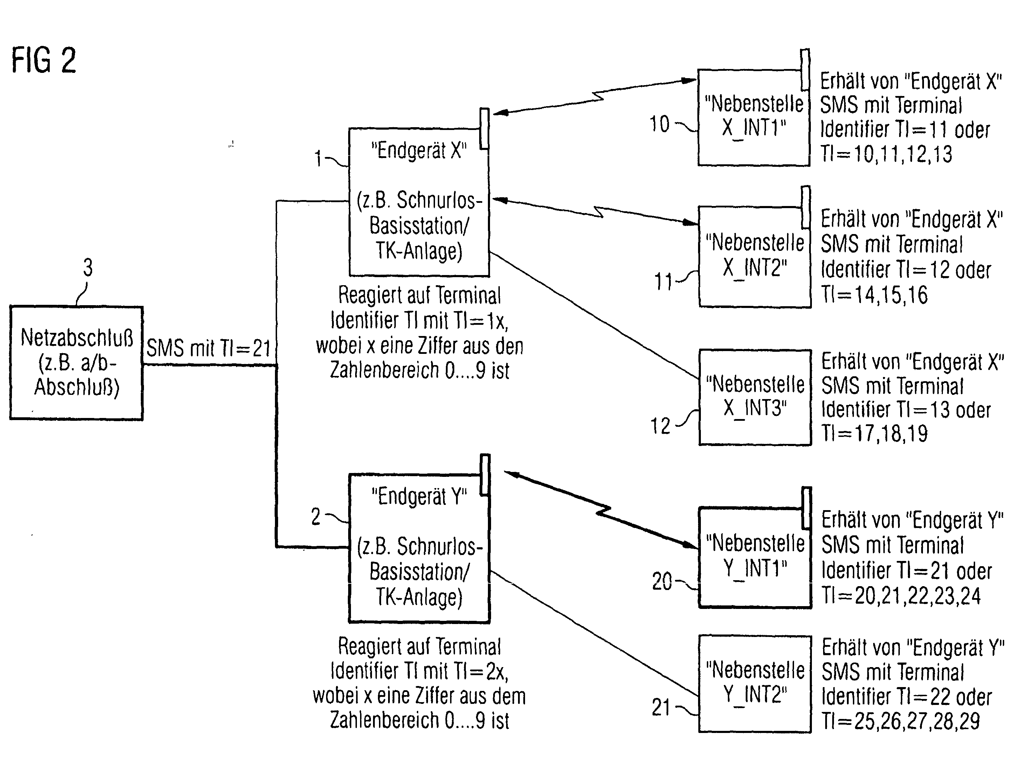

Zwei Ausführungsbeispiele der Erfindung werden anhand der FIGUREN 1 und 2 erläutert. Diese zeigen:
FIGUR 1 als erstes Ausführungsbeispiel ein SMS-Festnetzszenario mit zwei parallel am Festnetzanschluss betriebenen Nebenstellenanlagen, mehreren zugeordneten Nebenstellen und einer einstelligen Zahlenkennung (Terminal Identifier)
FIGUR 2 als zweites Ausführungsbeispiel ein SMS-Festnetzszenario mit zwei parallel am Festnetzanschluss betriebenen Nebenstellenanlagen, mehreren zugeordneten Nebenstellen und einer zweistelligen Zahlenkennung (Terminal Identifier)

FIGUR 1 ein SMS-Festnetzszenario, bei dem zwei Festnetzendgeräte 1, 2 - ein erstes "Endgerät X" 1 und ein zweites "Endgerät Y" 2 -, die als Nebenstellenanlage beispielsweise in Form einer Schnurlos-Basisstation nach dem DECT-Standard oder einer Telekommunikationsanlage (TK-Anlage) ausgebildet sind, an einem z.B. als analogen a/b-Anschluß ausgebildeten Festnetzanschluss 3 betrieben werden bzw. angeschlossen sind.

Das als Nebenstellenanlage ausgebildete erste "Endgerät X" 1 weist drei Nebenstellen 10, 11, 12 - eine erste "Nebenstelle X_INT1" 10, eine zweite "Nebenstelle X_INT2" 11 und eine dritte "Nebenstelle X_INT3" 12 für Internteilnehmer auf, von denen die erste "Nebenstelle X_INT1" 10 und die zweite "Nebenstelle X_INT2" 11 z.B. als Schnurlos-Mobilteile ausgebildet und über eine Luftschnittstelle 4 mit dem "Endgerät X" 1 verbunden sind, während die dritte "Nebenstelle X_INT3" 12 z.B. als gewöhnliches Telefon ausgebildet und über eine Leitungsschnittstelle 5 mit dem "Endgerät X" 1 verbunden ist.

Das als Nebenstellenanlage ausgebildete zweite "Endgerät Y" 2 weist zwei Nebenstellen 20, 21 - eine erste "Nebenstelle Y_INT1" 20 und eine zweite "Nebenstelle Y_INT2" 21 für Internteilnehmer auf, von denen die erste "Nebenstelle Y_INT1" 20 z.B. als Schnurlos-Mobilteil ausgebildet und über eine Luftschnittstelle 6 mit dem "Endgerät Y" 2 verbunden ist, während die zweite "Nebenstelle Y_INT2" 21 z.B. als gewöhnliches Telefon ausgebildet und über eine Leitungssclhnittstelle 7 mit dem "Endgerät Y" 2 verbunden ist.

Gemäß dem in FIGUR 1 dargestellten SMS-Festnetzszenario wird eine einstellige, im Zahlenbereich zwischen 0...9 liegende Zahlenkennung TI, der sogenannte "Terminal Identifier", in der Weise verwendet, dass dem ersten "Endgerät X" 1 und dem zweiten "Endgerät Y" 2 nicht wie beim Stand der Technik jeweils nur ein einziger TI-Wert zugeordnet wird, sondern mehrere TI-Werte und zwar beim ersten "Endgerät X" 1 die TI-Werte TI=0,1,2,3,4 und beim zweiten "Endgerät Y" 2 die TI-Werte TI=5,6,7,8,9.

### Mit anderen Worten:

Das erste "Endgerät X" 1 reagiert auf die TI-Werte TI=0,1,2,-3,4, während das zweite "Endgerät Y" 2 auf die TI-Werte TI=5,6,7,8,9 reagiert.

Auf diese Weise können an die Nebenstellen 10, 11, 12, 20, 21, die den Endgeräten 1, 2 in der in der FIGUR 1 dargestellten Weise zugeordnet sind, SMS-Nachrichten bzw. Kurznachrichten adressiert werden, indem diesen unter Berücksichtigung der dem jeweiligen Endgerät 1, 2 zugeordneten TI-Werte beispielsweise die folgenden TI-Werte zugeordnet werden:

Dem zum ersten "Endgerät X" 1 gehörenden Internteilnehmer der ersten "Nebenstelle X_INT1" 10 werden die TI-Werte TI=0,1,2 zugewiesen.

Dem zum ersten "Endgerät X" 1 gehörenden Internteilnehmer der zweiten "Nebenstelle X_INT2" 11 werden die TI-Werte TI=2,4 zugewiesen.

Dem zum ersten "Endgerät X" 1 gehörenden Internteilnehmer der dritten "Nebenstelle X_INT3" 12 wird der TI-Werte TI=3 zugewiesen.

Dem zum zweiten "Endgerät Y" 2 gehörenden Internteilnehmer der ersten "Nebenstelle Y_INT1" 20 wird der TI-Werte TI=5 zugewiesen.

Dem zum zweiten "Endgerät Y" 2 gehörenden Internteilnehmer der zweiten "Nebenstelle Y_INT2" 21 werden die TI-Werte TI=6,7,8,9 zugewiesen.

Es sei an dieser Stelle darauf hingewiesen, dass im Prinzip jede beliebige Verteilung der einstelligen Zahlenkennungen von 0 bis 9 auf die am SMS-Festnetzszenario beteiligten Endgeräte und Nebenstellen vorgenommen werden kann, solange sichergestellt ist, dass jedem an dem Netzabschluss 3 betriebenen Endgerät 1, 2 mehrere Zahlenkennungen zugewiesen werden. In der Praxis wird man einem als Nebenstellenanlage ausgebildeten Endgerät allerdings vorzugsweise nur so viele Zahlenkennungen zuweisen, wie Nebenstellen hinter dieser Nebenstellenanlage betrieben werden.

Gelangt nun bei dem dargestellten SMS-Festnetzszenario von dem für das Versenden und Empfangen von Kurznachrichten speziell ausgebildeten Dienstezentrum, dem sogenannten "Short Message Service Center (SMSC)", welches an das öffentliche Telefonnetz angeschlossen ist, einen SMS-Ruf mit dem TI-Wert TI=2 über den Netzabschluss 3 zu den an diesen angeschlossenen Endgeräten 1, 2, so würde in diesem Fall das erste "Endgerät X" 1 auf diesen Ruf reagieren und diesen gemäß der dargestellten Verteilung der TI-Werte an den Internteilnehmer der zugeordneten ersten "Nebenstelle X_INT1" 10 und an den Internteilnehmer der zugeordneten zweiten "Nebenstelle X_INT2" 11 weitergeben bzw. weiterleiten. Dies entspricht dem fettgedruckten Nachrichtenverlauf in FIGUR 1.

FIGUR 2 ein SMS-Festnetzszenario, bei dem wieder die zwei Festnetzendgeräte 1, 2 - das erste "Endgerät X" 1 und das zweite "Endgerät Y" 2 -, die als Nebenstellenanlage beispielsweise in Form einer Schnurlos-Basisstation nach dem DECT-Standard oder einer Telekommunikationsanlage (TK-Anlage) ausgebildet sind, an dem z.B. als analogen a/b-Anschluß ausgebildeten Festnetzanschluss 3 betrieben werden bzw. angeschlossen sind.

Das als Nebenstellenanlage ausgebildete erste "Endgerät X" 1 weist wieder die drei Nebenstellen 10, 11, 12 - die erste "Nebenstelle X_INT1" 10, die zweite "Nebenstelle X_INT2" 11 und die dritte "Nebenstelle X_INT3" 12 für Internteilnehmer auf, von denen die erste "Nebenstelle X_INT1" 10 und die zweite "Nebenstelle X_INT2" 11 z.B. als Schnurlos-Mobilteile ausgebildet und über die Luftschnittstelle 4 mit dem "Endgerät X" 1 verbunden sind, während die dritte "Nebenstelle X_INT3" 12 z.B. als gewöhnliches Telefon ausgebildet und über die Leitungsschnittstelle 5 mit dem "Endgerät X" 1 verbunden ist.

Das als Nebenstellenanlage ausgebildete zweite "Enclgerät Y" 2 weist wieder die zwei Nebenstellen 20, 21 - die erste "Nebenstelle Y_INT1" 20 und die zweite "Nebenstelle Y_INT2" 21 für Internteilnehmer auf, von denen die erste "Nebenstelle Y_INT1" 20 z.B. als Schnurlos-Mobilteil ausgebildet und über die Luftschnittstelle 6 mit dem "Endgerät Y" 2 verbunden ist, während die zweite "Nebenstelle Y_INT2" 21 z.B. als gewöhnliches Telefon ausgebildet und über die Leitungsschnittstelle 7 mit dem "Endgerät Y" 2 verbunden ist.

Gemäß dem in FIGUR 2 dargestellten SMS-Festnetzszenario wird eine zweistellige, jeweils im Zahlenbereich zwischen 0...9 liegende Zahlenkennung TI, der sogenannte "Terminal Identifier", in der Weise verwendet, dass
dem ersten "Endgerät X" 1 und dem zweiten "Endgerät Y" 2 zu deren Adressierung jeweils eine erste Ziffer der zweistelligen Zahlenkennung zugewiesen wird und zwar
dem ersten "Endgerät X" 1 die Ziffer "1" und dem zweiten "Endgerät Y" 2 die Ziffer "2"
und dass
den den ersten und zweiten Endgeräten zugeordneten Nebenstellen 10, 11, 12, 20, 21 jeweils mindestens eine zweite Ziffer der zweistelligen Zahlenkennung zugewiesen wird und zwar
der ersten "Nebenstelle X_INT1" 10 des ersten "Endgerätes X" 1 entweder die Ziffer "1" oder die Ziffern "0,1,2,3", so dass sich die TI-Werte TI=11 oder TI=10,11,12,13 für die erste "Nebenstelle X_INT1" 10 ergeben,
der zweiten "Nebenstelle X_INT2" 11 des ersten "Endgerätes X" 1 entweder die Ziffer "2" oder die Ziffern "4,5,6", so dass sich die TI-Werte TI=12 oder TI=14,15,16 für die zweite "Nebenstelle X_INT2" 11 ergeben,
der dritten "Nebenstelle X_INT3" 12 des ersten "Endgerätes X" 1 entweder die Ziffer "3" oder die Ziffern "7, 8, 9", so dass sich die TI-Werte TI=13 oder TI=17,18,19 für die dritte "Nebenstelle X_INT3" 12 ergeben,
der ersten "Nebenstelle Y_INT1" 20 des zweiten "Endgerätes Y" 2 entweder die Ziffer "1" oder die Ziffern "0,1,2,3,4", so dass sich die TI-Werte TI=21 oder TI=20,21,22,23,24 für die erste "Nebenstelle Y_INT1" 20 ergeben und
der zweiten "Nebenstelle Y_INT2" 21 des zweiten "Endgerätes Y" 2 entweder die Ziffer "2" oder die Ziffern "5,6,7,8,9", so dass sich die TI-Werte TI=22 oder TI=25,26,27,28,29 für die zweite "Nebenstelle Y_INT2" 21 ergeben.

### Mit anderen Worten:

Das erste "Endgerät X" 1 reagiert auf die TI-Werte TI=1x, wobei x eine Ziffer aus dem Zahlenbereich 0...9 ist, während das zweite "Endgerät Y" 2 auf die TI-Werte TI=2x, wobei x eine Ziffer aus dem Zahlenbereich 0...9 ist, reagiert.

Es sei an dieser Stelle angemerkt, dass es statt eine zweistelligen Zahlenkennung zu verwenden, auch möglich ist, eine Zahlenkennung mit mehr als zwei Stellen zu verwenden. Dies würde eine alternative Art der Konfiguration erlauben.

Auf diese Weise können alternativ zu dem ersten Ausführungsbeispiel an die Nebenstellen 10, 11, 12, 20, 21, die den Endgeräten 1, 2 in der in der FIGUR 1 dargestellten Weise zugeordnet sind, SMS-Nachrichten bzw. Kurznachrichten direkt (ENTWEDER-Fall) oder aufgrund der freien Konfigurierbarkeit (ODER-Fall) indirekt adressiert werden.

Es sei an dieser Stelle wieder darauf hingewiesen, dass im Prinzip jede beliebige Verteilung der zweistelligen Zahlenkennungen von jeweils 0 bis 9 auf die am SMS-Festnetzszenario beteiligten Endgeräte und Nebenstellen vorgenommen werden kann. In der Praxis wird man einem als Nebenstellenanlage ausgebildeten Endgerät allerdings vorzugsweise nur so viele Zahlenkennungen zuweisen, wie Nebenstellen hinter dieser Nebenstellenanlage betrieben werden.

Gelangt nun bei dem dargestellten SMS-Festnetzszenario von dem für das Versenden und Empfangen von Kurznachrichten speziell ausgebildeten Dienstezentrum, dem sogenannten "Short Message Service Center (SMSC)", welches an das öffentliche Telefonnetz angeschlossen ist, einen SMS-Ruf mit dem TI-Wert TI=21 über den Netzabschluss 3 zu den an diesen angeschlossenen Endgeräten 1, 2, so würde in diesem Fall das zweite "Endgerät Y" 2 auf diesen Ruf reagieren und diesen gemäß der dargestellten Verteilung der TI-Werte an den Internteilnehmer der zugeordneten ersten "Nebenstelle Y_INT1" 20 weitergeben bzw. weiterleiten. Dies entspricht dem fettgedruckten Nachrichtenverlauf in FIGUR 2.

## Patentansprüche

1. Verfahren zur Adressierbarkeit von Kurznachrichten an mindestens ein für deren Empfang geeignetes Endgerät im Festnetz (3), bei dem eine erste einstellige Zahlenkennung dem jeweiligen Festnetzendgerät zugewiesen wird,
**dadurch gekennzeichnet, dass**
jedem Festnetzendgerät (1, 2) mehrere Zahlenkennungen zugewiesen werden, so dass bei einem als Nebenstellenanlage mit mehreren Nebenstellen (10, 11, 12, 20, 21) ausgebildeten Festnetzendgerät (1, 2) die Zahlenkennungen beliebig auf die Nebenstellen (10, 11, 12, 20, 21) verteilbar sind.

2. Verfahren nach Anspruch 1, **dadurch gekennzeichnet, dass**
die jeweilige Zahlenkennung aus einer zweiten einstelligen Zahlenkennung und der ersten einstelligen Zahlenkennung gebildet wird.

3. Verfahren nach Anspruch 2, **dadurch gekennzeichnet, dass**
mit der ersten Zahlenkennung das Festnetzendgerät (1, 2) adressiert wird und mit der zweiten Zahlenkennung bei dem als Nebenstellenanlage ausgebildeten Festnetzendgerät (1, 2) die Nebenstellen (10, 11, 12, 20, 21) adressiert werden.

## Claims

1. Method for addressing short messages to at least one terminal suitable for receiving the same in a fixed network (3), in which an initial one-digit numeric identifier is assigned to the relevant fixed-network terminal,
**characterised in that**
several numeric identifiers are assigned to each fixed-network terminal (1, 2), in such a way that for a fixed-network terminal (1, 2) that is configured as a private branch exchange with several extensions (10, 11, 12, 20, 21), the numeric identifiers can be arbitrarily distributed among the extensions (10, 11, 12, 20, 21).

2. Method according to Claim 1, **characterised in that**
the relevant numeric identifier is formed from a second single-digit numeric identifier and the first numeric identifier.

3. Method according to Claim 2, **characterised in that**
the fixed-network terminal (1, 2) is addressed with the first numeric identifier and the extensions (10, 11, 12, 20, 21) are addressed with the second numeric identifier in the fixed-network terminal (1, 2) that is configured as a private branch exchange.

## Revendications

1. Procédé pour l'adressabilité de messages courts à au moins un terminal approprié pour leur réception dans le réseau fixe (3), dans lequel un premier code numérique à un chiffre est attribué au terminal de réseau fixe respectif,
**caractérisé**
**en ce que** plusieurs codes numériques sont attribués à chaque terminal de réseau fixe (1, 2) de sorte que, avec un terminal de réseau fixe (1, 2) réalisé comme installation à postes supplémentaires avec plusieurs postes supplémentaires (10, 11, 12, 20, 21), les codes numériques peuvent être répartis de façon quelconque entre les postes supplémentaires (10, 11, 12, 20, 21).

2. Procédé selon la revendication 1, **caractérisé en ce que**
le code numérique respectif est formé à partir d'un second code numérique à un chiffre et du premier code numérique à un chiffre.

3. Procédé selon la revendication 2, **caractérisé en ce que**
le terminal de réseau fixe (1, 2) est adressé avec le premier code numérique et les postes supplémentaires (10, 11, 12, 20, 21) sont adressés avec le second code numérique sur le terminal de réseau fixe (1, 2) conçu comme installation à postes supplémentaires.
